# EUROPEAN PATENT APPLICATION

(11) **EP 2 658 204 A1**
(43) Date of publication of application: **30.10.2013**
(21) Application number: 12165895.9
(22) Date of filing: 27.04.2012
(51) Int. Cl.: H04L 29/06, H04L 29/08, G05B 19/418, G05B 19/048

(54) **Access control in an industrial control system**

(71) Applicant: ABB Research Ltd., 8050 Zürich (CH)
(72) Inventor: Hristova, Ana, 5400 Baden (CH); Obermeier, Sebastian, 5107 Schinznach-Dorf (CH); Schierholz, Ragnar, 5436 Würenlos (CH); Hadeli, Hadeli, 5400 Baden (CH)
(74) Representative: ABB Patent Attorneys

(57) **Abstract**

Access control to embedded devices of an industrial control system wherein the embedded devices are grouped in security domains. When an access request is received, a security domain permission attribute associated with the access request and a security domain assignment attribute associated with the embedded device are retrieved. Access to the embedded device is denied, when the security domain permission attribute does not match with the security domain assignment attribute.

## Description

### FIELD OF THE INVENTION

The invention relates to the field of access control in industrial control systems. In particular, the invention relates to a method for providing access control to embedded devices in an industrial control system.

### BACKGROUND OF THE INVENTION

Industrial control systems may comprise a large number of PCs, dedicated controllers, embedded devices, engineering or operation clients and the like as interconnected nodes of a data communication network. For example, the interconnected nodes may include robot controllers of a robotized production line performing a regular production process of a specific product. When deploying the regular production process, each user may be provided with a unique username and password, and users may employ centrally managed credentials for accessing all the nodes of the communication network.

In this context a secret production process of a next generation product may be deployed side-to-side with the regular production process, and in particular sharing the same control system and data communication network. However, with the secret production process, the nodes of a secret production line should be accessed only by selected users. Otherwise the confidentiality of such secret production processes may be at stake, and there may be security risks if the nodes in secret parts of the data communication network are accessible by any user that supplies correct user credentials.

One solution of segregation of the data communication network is to use a gateway or similar devices for segmenting the data communication network. However, this solution may have drawbacks, as a lot of security controls such as firewalls, routers, and switches may have to be manually adapted. In addition, the segregation may not prevent a user from locally accessing a secret robot controller via a local user interface.

### DESCRIPTION OF THE INVENTION

It is an object of the invention to simplify the administration and configuration of an industrial control system.

This objective is achieved by the subject-matter of the independent claims. Further exemplary embodiments are evident from the dependent claims and the following description.

A first aspect of the invention relates to a method of controlling access to nodes of an industrial control system including, but not limited, Personal Computers PCs, dedicated controllers, embedded devices, and engineering or operation clients executing specific applications of the industrial control system. The nodes may be interconnected by a flat data communication network of the industrial control system that is devoid of network segregation means such as gateways or firewalls.

According to the invention, the method comprises the steps of: receiving a request for access to a target node; retrieving a security domain permission attribute associated with the request; retrieving a security domain assignment attribute associated with the target node, wherein each node of a group of nodes including the target node is associated with the security domain assignment attribute; and denying access to the target node in case the security domain permission attribute does not match with the security domain assignment attribute.

According to the invention the nodes of an industrial control system are grouped into security domains. Access to the security domains may be handled by security domain attributes, in particular security domain assignment attributes, which indicate the assignment of a node to a security group, as well as security domain permission attributes, which indicate that a user or another node has the right to access nodes in a security domain. A target node may deny access at all, if a user or another node requesting to access the target node has a security domain permission attribute that does not match or correspond to the security domain of the target node.

Further aspects of the invention relate to a computer program for providing access control to the industrial control system, and a computer-readable medium. A computer-readable medium may be a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e. g. the Internet, which allows downloading a program code.

A further aspect of the invention relates to an industrial control system comprising a plurality of nodes as described in the above and in the following interconnected via a data communication network.

It has to be understood that features of the method as described in the above and in the following may be features of the computer program, the computer-readable medium and the industrial control system, and vice versa.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an industrial control system according to an embodiment of the invention.
Fig. 2 shows a flow diagram for a method of providing access control for industrial embedded devices.

In principle, identical parts are provided with the same reference symbols in the figures.

### DETAILED DESCRIPTION OF EXEMPLARY EMBODIMENTS

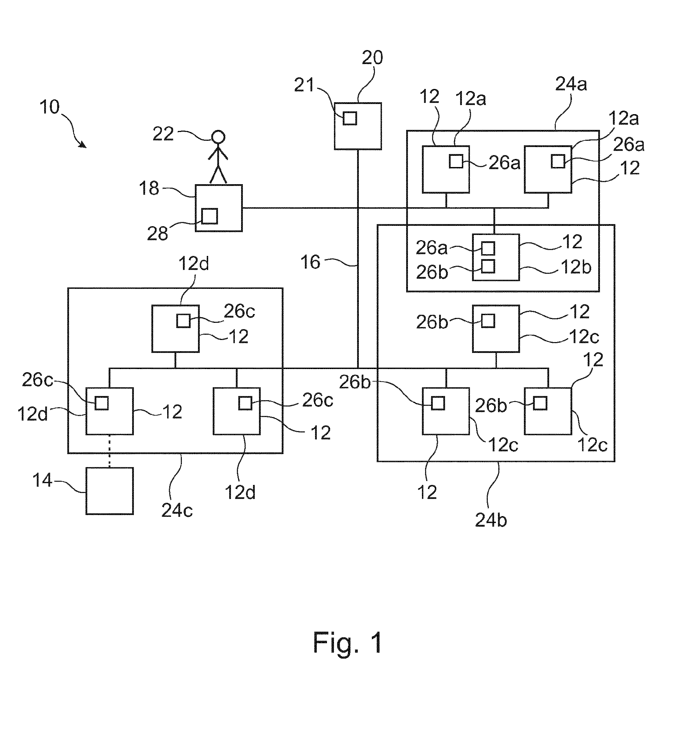

Fig. 1 shows an industrial control system 10, comprising a plurality of embedded devices 12, 12a, 12b, 12c, 12d. An embedded device 12 may be a controller of an industrial process device 14, like a field device (for example switches, breakers, measurement devices, robots, etc.). For example, the embedded device 12 may be a robot controller.

In Fig. 1, as an example, only one industrial process device 14 is depicted. Usually, every embedded device 12 may be associated with an industrial process device 14.

It may be possible that an embedded device 12 is part of an industrial device 14. However, it may be also possible that the embedded device 12 is remote from the industrial process device 14, and is connected via a data communication line 16 with the industrial process device 14.

Besides the embedded devices 12 and the industrial process devices 14, the industrial control system 10 comprises a data communication network 16 interconnecting the embedded devices 12.

Via the data communication network 16, the embedded devices of the industrial control system 10 may exchange data with each other and with further devices 18, 20 interconnected with the data communication network 16. The data communication network 16 may be a flat network, i.e. a network without firewalls, gateways, VLANs, other separation devices. The data communication network 16 may be a single network on plant level.

According to an embodiment of the invention, the industrial control system 10 comprises a plurality of embedded devices 12 interconnected via a data communication network 16.

For example, a user 22 may request access to the embedded devices 12 via a monitoring and/or configuration device 18, which may be a personal computer interconnected with the data communication network 16. The device 18 also may be a hand-held device 18 wirelessly connected to the data communication network 16.

Furthermore, a central system 20 may be connected to the data communication network 16. The central system 20 may be adapted for monitoring and/or controlling the embedded devices 12. For example, in the case the industrial process devices 14 are robots, the central system 20 may coordinate the movement of the robots 14. The central system 20 may comprise a database 21 storing data that may be provided to the embedded devices 12.

The embedded devices 12 are grouped in security domains 24a, 24b, 24c. The embedded devices 12a, 12b are associated with the security domain 24a, the embedded devices 12b, 12c are associated with the security domain 24b, and the embedded devices 12d are associated with the security domain 24c. The use of the concept of security domains may enable a creation of a logical segmentation of the data communication network 16. The security domains 24a, 24b, 24c may group industrial embedded devices 12 into virtual security zones 24a, 24b, 24c, without increasing the complexity of the network topology.

A security domain 24a, 24b, 24c may be characterized by a security domain assignment attribute 26a, 26b, 26c. An embedded device 12 may be associated or assigned with a security domain 24a, 24b, 24c by assigning it a security domain assignment attribute 26a, 26b, 26c.

According to an embodiment of the invention, each embedded device 12 of a group 24a, 24b, 24c of embedded devices comprising the embedded device 12 is associated with the security domain assignment attribute 26a, 26b, 26c.

It has to be noted that an embedded device 12, in particular a "borderline" device 12b in-between two security domains 24a, 24b, may be associated with or assigned to more than one security domain 24a, 24b. In this case, for example, more than one security domain assignment attribute 26a, 26b may be assigned with the embedded device 12b.

According to an embodiment of the invention, an embedded device 12b is part of a first group 24a of embedded devices, associated with a first security domain assignment attribute 26a, and the embedded device 12b is part of a second group 24b of embedded devices, associated with a second security domain assignment attribute 26b.

The security domain assignment attribute 26a, 26b, 26c of an embedded device 12 may be stored in the embedded device 12, for example in its configuration file, or may be stored in the central system 20. For example, the database 21 may comprise a table with entries assigning an identifier of an embedded device 12 with a security domain assignment attribute 26a, 26b, 26c.

According to an embodiment of the invention, the industrial control system 10 comprises a central system 20 storing security domain assignment attributes 26a, 26b, 26c.

Summarized, a security domain specific security domain assignment attribute 26a, 26b, 26c may be assigned to every embedded device 12 belonging to the security domain 24a, 24b, 24c characterized by the security domain assignment attribute 26a, 26b, 26c.

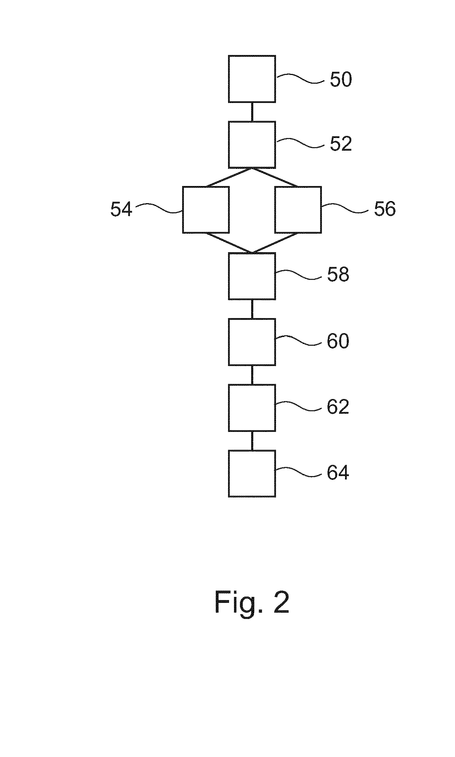

For gaining access to an embedded device 12, a two-stage method may be performed, as will be explained in more detail with respect to Fig. 2.

As an example, the user 22 may gain access to the embedded device 12b.

In a first stage, the embedded device 12b authenticates the user 22 by verifying the user's credentials such as user name and password. The embedded device 12b then verifies whether a security domain permission attribute 28 matches with the security domain assignment attribute 26a, 26b. If the attribute 28 does not match with one of the attributes 26a, 26b, access is denied. In such a way, a security domain 24a, 24b, 24c may define a basic ("whole device") access criterion.

For example, in the device 18, a user profile is stored which comprises the security domain permission attribute 28. However, it may be also possible that in the central system 20, for example in the database 21, a table is stored having entries associating a user 22 with a security domain permission attribute 28.

In this way, the notion of a security domain may be used as criterion for access control purposes. Two new attributes or mappings are added, which encode a user-to-security domain mapping (i. e. the attribute 28) and a device-to-security domain mapping (i. e. the attribute 26a, 26b, 26c), which may allow restricting the area (i. e. the security domain 24a, 24b, 24c), a user 22 is allowed to access.

When the security domain permission attribute 28 of a user 22 matches with the security domain assignment attribute 26a, 26b of the device 12b, in a second stage, the embedded device 12b may perform role based access control (RBAC) based on the user 22 that wants to gain access to the embedded device 12b. For example, the user profile may comprise a role attribute, and the configuration files of the embedded device 12b may comprise a table of role attributes and associated permissions, which are compared with the role attribute of the user 22 to verify, whether the user 22 has the permission to execute the function in the embedded device 12 he is requesting to execute.

Thus, security domains 24a, 24b, 24c may be combined with other access control standards such as role based access control (RBAC), which allows the use of default roles as they may be defined in an embedded device 12 itself, instead of defining deployment specific roles. In this case, it would allow at the same time users 22 with the same role to have different access permission levels on the same type of embedded device 12, depending on the security domain 24a, 24b, 24c to which the embedded device 12 and the user 22 belong to.

Fig. 2 shows a flow diagram for a method for providing access control to an industrial embedded device 12.

In step 50, a security domain assignment attribute is set for each embedded device 12, for example by an administrator of the industrial control system 10. An embedded device 12b may be associated with more than one security domain 24a, 24b, 24c, and therefore the embedded device 12b may be assigned with more than one security domain assignment attribute 26a, 26b, 26c.

For example, a newly added embedded device 12 and/or a newly created user profile 18 may contain an empty security domain attribute 28, 26a, 26b, 26c. As already noted, a user 22 and an embedded device 12 may be assigned to more than one security domain 24a, 24b, 24c.

The security domain assignment attributes 26a, 26b, 26c of an embedded device 12 may be stored in the configuration file of the embedded device 12 or in the central system 20. For example, every embedded device 12 has an identifier that is unique with respect to the data communication network 16, and in the database 21 of the central system 20 a table is stored with entries comprising a unique identifier of an embedded device 12 and a security domain assignment attribute 26a, 26b, 26c.

An administrator of the industrial control system 10 may assign a security domain assignment attribute 26a, 26b, 26c to an embedded device 12 by including a device property into a configuration file of the industrial embedded device 12, whereby this information may be stored with the embedded device 12 or may be retrievable from a central repository or system 20.

The security domain assignment attributes 26a, 26b, 26c may be character strings. For example, the attribute 26a may be "Production_Line_A", the attribute 26b may be "Production_Line_B" and the attribute 26c may be "NextGeneration_Line_A".

In step 52, a security domain permission attribute 28 is set for the user 22, for example by an administrator of the industrial control system 10 in a user profile of the user 22. The user profile may already contain existing attributes such as the user's role, company ID, department, phone number, or other specific parameters.

A user 22 may have more than one security domain permission attribute. The user 22 may be allowed to access more than one security domain 24a, 24b, 24c. A user may also be allowed to access a hierarchically superior "super-domain" that may include one or more non-overlapping security domains. The security domain permission attribute of the user 22 may be stored in the central system 20 or in a user profile stored in the device 18.

The security domain permission attribute 28 may be a character string. In particular, the security domain permission attribute 28 may be a wildcard string. A wildcard string may be a character string having special characters that represent a placeholder for other characters. For example, the character "?" may represent one arbitrary character or the character "*" may represent an arbitrary character string. This may allow the use of regular expressions in the definition of the security domain attributes 28, 26a, 26b, 26c. A regular expression may be an expression comprising a wildcard string.

For example, the security domain permission attribute 28 may be "Production*" (this is a "regular expression", to be used for string matching), representing all possible character strings starting with "Production". A user 22 who is assigned to the security domain permission attribute "Production*" may be allowed to access embedded devices 12 assigned to the security domain assignment attribute "Production_Line_A", while a user 22 who is assigned to the security domain permission attributes "Production_Line_A" and "NextGeneration_Line_?" may be able to access embedded devices assigned to the security domain assignment attribute "NextGeneration_Line_D" but not to embedded devices 12 assigned to the security domain assignment attribute "Production_Line_D"

In a step 54, a user 22 or a device 12a requests access to a device 12b.

For example, the user 22 inputs his username and password into the device 18 and selects an embedded device 12 (for example 12b) he wants to access. Furthermore, the user 22 may specify that he wants to execute a specific function of the embedded device 12b, for example, the modification of a specific configuration parameter.

According to an embodiment of the invention, the security domain permission attribute 28 is stored in a user profile of a user 22 requesting for access to the embedded device 12 by the access device 18.

The request of the user 22 comprising authentication data like the username and the password and further data, like the function/command to be executed, is sent to the embedded device 12b via the data communication network 16. The request of the user 22 may further comprise the security domain permission attribute 28.

Alternatively, in step 56, a first (accessing) embedded device 12 (for example 12a) requests access to a second embedded device 12 (for example 12b). For example, the second embedded device 12b may be a super-ordinated controller 12b, and the first embedded device 12a requests further control information from the super-ordinated controller 12b.

The request of the first embedded device 12a comprising authentication data of the first embedded device 12a is sent to the second embedded device 12b. The security domain assignment attribute 26a of the first device 12a may be used as security domain permission attribute of the first device 12a and may be part of the request of the first embedded device 12a.

According to an embodiment of the invention, the security domain permission attribute 28 is the security domain assignment attribute 26a, 26b, 26c of a further embedded device 12a.

In step 58, the request of the user 22 or the request of the first embedded device 12a is received in the (second) embedded device 12b.

According to an embodiment of the invention, the method comprises the step of: receiving, in an embedded device 12, a request for access to the embedded device 12.

With the aid of the authentication data stored in the request, the embedded device 12b authenticates the user 22 or the first embedded device 12a. In the case that authentication fails, access to the embedded device 12b is denied. Otherwise, the method continues with step 58.

According to an embodiment of the invention, the request for access is received from an access device 18 connected to the data communication network 16.

According to an embodiment of the invention, the request for access is received from a further embedded device 12a.

In step 58, the security domain permission attribute 28 of the accessing user 22 or accessing device 12a and the security domain assignment attribute 26a, 26b of the embedded device 12b, which receives the request, are retrieved.

According to an embodiment of the invention, the method comprises the step of: retrieving a security domain permission attribute 28 associated with the request.

According to an embodiment of the invention, the method comprises the step of: retrieving a security domain assignment attribute 26a, 26b, 26c associated with an embedded device 12.

For the security domain permission attribute 28, this may be achieved by either extracting the security domain permission attribute 28 from the request, or by requesting the security domain permission attribute 28 from the central system 20. For example, the request comprises only an identifier (for example a username) of the user 22, or the accessing device 12a and the central system 20 may be adapted to translate the identifier into a security domain permission attribute 28 for the user 22 or accessing device 12a, for example with a table stored in the database 21.

The security domain assignment attribute 26a, 26b may be either read from a configuration file of the embedded device 12b, receiving the request, or may be requested from the central system 20.

According to an embodiment of the invention, the security domain assignment attribute 26a, 26b, 26c of an embedded device 12 is stored in the embedded device 12.

According to an embodiment of the invention, the security domain assignment attribute 26a, 26b, 26c associated with an embedded device 12 is stored in a central system 20 connected to the data communication network 16.

As already described, the central system 20 may be adapted to translate the identifier of the embedded device 12b, receiving the request into a respective security domain assignment attribute 26a, 26b.

According to an embodiment of the invention, an embedded device 12 retrieves the security domain assignment attribute 26a, 26b, 26c from the central system 20.

In step 60, the retrieved security domain permission attribute 28 and the retrieved security domain assignment attribute 26a, 26b, 26c are compared, and the embedded device 12b verifies, whether the two attributes match with each other.

For example, the attributes 28, 26a, 26b, 26c are numbers or character strings. In this case, the security domain permission attribute 28 and the security domain assignment attribute 26a, 26b, 26c may match, if they are equal.

According to an embodiment of the invention, the security domain permission attribute 28 and the security domain assignment attribute 26a, 26b, 26c are character strings.

According to an embodiment of the invention, the matching of the security domain permission attribute 28, associated with the request, and the security domain assignment attribute 26a, 26b, 26c, associated with the embedded device 12, comprise comparing the character string of the security domain permission attribute 28 and the character string of the security domain assignment attribute 26a, 26b, 26c.

Furthermore, the security domain permission attribute 28 may be a wildcard string. In this case, the security domain permission attribute 28 and the security domain assignment attribute 26a, 26b, 26c may match, if the wildcard string represents the security domain assignment attribute 26a, 26b, 26c.

According to an embodiment of the invention, the security domain permission attribute 28 is a wildcard string.

According to an embodiment of the invention, the security domain permission attribute 28 matches with the security domain assignment attribute 26a, 26b, 26c, when the character string of the security domain assignment attribute 26a, 26b, 26c matches the wildcard string.

As an example, if the security domain permission attribute 28 is "Production_Line*" and the security domain assignment attribute 26a is "Production_Line _A", the two attributes match.

In step 62, if the two attributes 28 and 26a, 26b, 26c do not match, access to the embedded device 12b is denied. Otherwise, the method continues with step 64.

According to an embodiment of the invention, the method comprises the step of: denying access to an embedded device 12, when the security domain permission attribute 28 does not match with the security domain assignment attribute 26a, 26b, 26c.

In general, if an embedded device 12b has no security domain assignment attribute 26a, 26b, 26c defined, all accessing subjects (a user 22 or an embedded device 12a) may access the device 12b, regardless of the security domain permission attribute 28 assigned to the subject. This may correspond to a security domain assignment attribute 26a, 26b, 26c being the wildcard string "*".

Otherwise, if a subject (a user 22 or device 12a) has no security domain permission attribute 28 defined, the subject 22, 12a may only access an embedded device 12b being assigned to an security domain assignment attribute 26a, 26b, 26c equal to "*". This may correspond to an empty security domain assignment attribute.

If the security domain permission attribute 28 and the security domain assignment attribute 26a, 26b, 26c do not match, access to the device 12b is denied to a subject (a user 22 or a device 12a).

In step 64, if the two attributes 28 and 26a, 26b, 26c match, either access is granted to the embedded device 12b, or an additional access control standard such as role based access control (RBAC) is executed in step 64. Additional access control checks for permission may depend on the individual software of the embedded device 12b.

According to an embodiment of the invention, the method comprises the step of: performing role based authorization based on the request, if the access to an embedded device 12 is not denied.

For example, in step 64, the embedded device 12b verifies, whether the user 22 or the accessing embedded device 12a has a role, which permits to execute the function, which is requested to being executed. The execution of the function is granted, if the role of the user 22 or the accessing embedded device 12a permits it. It has to be noted that all embedded devices 12 (and not only the embedded device 12b) of the industrial control system 10 may be adapted for executing the method as described in the above.

Summarized, the described system and method may provide access control to embedded devices like robot controllers, especially those that work on secret next generation products, without additional network devices. The system and method may also be used for fine granulated access control based on role based access control (RBAC) with a small administration overhead. This may be achieved by additionally associating users and devices with a specific security domain, and by avoiding the need for discretionary access control (for example explicit listing of accessible resources), but yet providing higher degree of granulation than what RBAC standard usually may allow.

Furthermore, with the system and the method, the simplicity of the network topology may be maintained. To the contrary, using network segregation instead of security domains may result in additional network devices which may increase the complexity of the infrastructure.

The introduction of security domains does not impose the need for additional network elements in the infrastructure and the introduction of a central user account management system, avoiding increased costs that may be associated with these steps (e. g. for administration, maintenance, patching, log review and licensing).

The implementation of the system and the method may be very easy, as only minimal changes in the code are required. For example, for a general authorization only one additional check is needed, e. g. checking if the security domain permission attribute of the user and the security domain assignment attribute of the device correspond.

The reconfiguration needed when an embedded device is transferred from one security domain to another may be minimal, as only the security domain assignment attribute has to be updated, and previous access controls established may still be applicable.

The system and the method are not only applicable for user-to-device interaction, but also for device-to-device authorization. In systems where embedded devices may access between each other and may perform operations (e. g. read, write, modify, delete) on each other, the security domain may also serve for restricting the devices to which other devices can access.

A user may have access to embedded devices belonging to a series of security domains which need to be specified. In this case, the possibility of defining security domains by using regular expressions may be especially advantageous.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for providing access control to nodes of an industrial control system (10) interconnected by a data communication network (16), the method comprising the steps of:
receiving a request for access to a node (12);
retrieving a security domain permission attribute (28) associated with the request;
retrieving a security domain assignment attribute (26a, 26b, 26c) associated with the node (12), wherein each node (12) of a group (24a, 24b, 24c) of nodes comprising the node (12) is associated with the security domain assignment attribute (26a, 26b, 26c);
denying access to the node (12), when the security domain permission attribute (28) does not match with the security domain assignment attribute (26a, 26b, 26c).

2. The method of claim 1,
wherein the request for access is received from an access device (18) connected to the data communication network (16);
wherein the security domain permission attribute (28) is stored in a user profile of a user (22) requesting for access to the node (12).

3. The method of claim 1,
wherein the request for access is received from a further node;
wherein the security domain permission attribute (28) is the security domain assignment attribute (26a, 26b, 26c) of the further node.

4. The method of one of the preceding claims,
wherein the security domain assignment attribute (26a, 26b, 26c) of the node (12) is stored in the embedded device (12).

5. The method of one of the claims 1 to 3,
wherein the security domain permission attribute (28) and/or the security domain assignment attribute (26a, 26b, 26c) is stored in a central system (20) connected to the data communication network (16);
wherein the security domain permission attribute (28) and/or the security domain assignment attribute (26a, 26b, 26c) is retrieved from the central system (20).

6. The method of one of the preceding claims,
wherein the security domain permission attribute (28) and the security domain assignment attribute (26a, 26b, 26c) are character strings;
wherein the matching of the security domain permission attribute (28), associated with the request, and the security domain assignment attribute (26a, 26b, 26c), associated with the node (12), comprises comparing the character string of the security domain permission attribute (28) and the character string of the security domain assignment attribute (26a, 26b, 26c).

7. The method of claim 6,
wherein the security domain permission attribute (28) is a wildcard string;
wherein the security domain permission attribute (28) matches with the security domain assignment attribute (26a, 26b, 26c), when the character string of the security domain assignment attribute (26a, 26b, 26c) matches the wildcard string.

8. The method of one of the preceding claims, further comprising the step of:
performing role based authorization based on the request, if the access to the node (12) is not denied.

9. The method of one of the preceding claims,
wherein the node (12b) is part of a first group (24a) of embedded devices, associated with a first security domain assignment attribute (26a), and the node (12b) is part of a second group (24b) of embedded devices, associated with a second security domain assignment attribute (24b).

10. A computer program for providing access control to nodes of an industrial control system, which, when being executed, is adapted to carry out the steps of the method of one of claims 1 to 9.

11. A computer-readable medium, in which a computer program according to claim 10 is stored.

12. An industrial control system (10) comprising a plurality of nodes (12) interconnected via a data communication network (16) and adapted to carry out the steps of the method of one of claims 1 to 9.

13. The industrial control system (10) of claim 12, further comprising:
a central system (20) storing security domain permission attribute (28) and/or security domain assignment attributes (26a, 26b, 26c).

14. The industrial control system (10) of claim 12, wherein the data communication network (16) is a plant-level communication network devoid of firewalls and gateways.
